# EUROPÄISCHE PATENTSCHRIFT

(11) **EP 2 309 948 B1**
(45) Veröffentlichungstag und Bekanntmachung des Hinweises auf die Patenterteilung: **02.01.2019**
(21) Anmeldenummer: 09781389.3
(22) Anmeldetag: 03.08.2009
(51) Int. Cl.: A61C 19/04, G01B 11/25

(54) **3D-DENTALKAMERA ZUR ERFASSUNG VON OBERFLÄCHENSTRUKTUREN EINES MESSOBJEKTS MITTELS TRIANGULATION**
3D DENTAL CAMERA FOR RECORDING SURFACE STRUCTURES OF A MEASURING OBJECT BY MEANS OF TRIANGULATION
CAMÉRA 3D À USAGE DENTAIRE POUR LA DÉTECTION PAR TRIANGULATION DE STRUCTURES SUPERFICIELLES D'UN OBJET À MESURER

(30) Priorität: 01.08.2008 DE 102008040947
(43) Veröffentlichungstag der Anmeldung: 20.04.2011
(73) Patentinhaber: Sirona Dental Systems GmbH, 64625 Bensheim (DE)
(72) Erfinder: SCHMIDT, Volker, 12209 Berlin (DE)
(74) Vertreter: Sommer, Peter
(86) Internationale Anmeldenummer: PCT/EP2009/059991
(87) Internationale Veröffentlichungsnummer: WO 2010/012838

(56) Entgegenhaltungen:
- DE-A1- 3 829 925
- DE-C1- 19 829 278
- DE-U1- 9 013 454
- US-A1- 2005 090 749
- US-B1- 6 885 464

## Beschreibung

### Technisches Gebiet

Die Erfindung betrifft eine 3D-Dentalkamera zur Erfassung von Oberflächenstrukturen eines Messobjekts mittels Triangulation. Die 3D-Dentalkamera umfasst dabei eine Lichtquelle zur Erzeugung eines Beleuchtungsstrahls, Mittel zur Fokussierung des Beleuchtungsstrahls auf die Oberfläche des Messobjekts, einen Bildsensor zur Aufnahme eines in Form eines Beobachtungsstrahls von der Oberfläche des Messobjekts zurückgestreuten Beleuchtungsstrahls und Mittel zur Fokussierung des Beobachtungsstrahls auf dem Bildsensor. Bei dem Triangulationsverfahren wird anhand eines bekannten Abstandes zwischen der Lichtquelle und dem Bildsensor, einer sogenannten Triangulationsbasis, eines ersten Triangulationswinkels des Beleuchtungsstrahls zur Triangulationsbasis und eines zweiten Triangulationswinkels des Beleuchtungsstrahls zur Triangulationsbasis die räumliche Lage des Messobjekts ermittelt.

### Stand der Technik

Aus dem Stand der Technik sind mehrere 3D-Dentalkameras bekannt, die es ermöglichen, mittels Triangulation Oberflächenstrukturen von Messobjekten, wie von Zähnen eines Patienten, zu vermessen.

Aus der DE 198 29 278 C1 ist eine 3D-Kamera zur Erfassung von Oberflächenstrukturen, insbesondere für zahnmedizinische Zwecke, bekannt. Diese 3D-Kamera weist Mittel zum Erzeugen eines Lichtstrahlenbündels, welches über einen Projektionsstrahlengang aus einer ersten Richtung zu einem Messobjekt lenkbar ist auf, wobei der zurückgestrahlte Lichtstrahlenbündel über einen Beobachtungsstrahlengang zum Empfangen zu einen Bildsensor geleitet wird. Der Schwerpunktstrahl des Projektionsstrahlengangs und der des Beobachtungsstrahlengangs nehmen einen Triangulationswinkel zueinander ein. Darüber hinaus sind Mittel im Projektionsstrahlengang zum Erzeugen eines Referenzmusters vorhanden, wobei in dem Projektionsstrahlengang und/oder den Beobachtungsstrahlengang Mittel zur Veränderung des Triangulationswinkels vorgesehen sind. Als Mittel zur Veränderung des Triangulationswinkels im Projektionsstrahlengang wird eine asymmetrische veränderbare Blende, ein Abschattungsblättchen, insbesondere in Form eines durch einen Hubmagneten betriebenen Fähnchens oder eine aus Flüssigkristallen bestehende Blende offenbart. Der Triangulationswinkel wird somit durch eine asymmetrische teilweise Abschattung der Lichtquelle verändert, indem der Schwerpunktstrahl im Projektionsstrahlengang verschoben wird. Darüber hinaus kann der Schwerpunkt des Beobachtungsstrahlengangs durch teilweise Abschattung ebenfalls verschoben werden, so dass der Triangulationswinkel verändert wird. Diese Abschattung kann beispielsweise durch mechanisch angetriebenen Fähnchen im Beobachtungsstrahlengangs erfolgen, die das Leuchtfeld des Beobachtungsstrahls teilweise abschatten können.

Auch Familienmitglied US 6,885,464 B1 wird hier erwähnt. Ein Nachteil dieser 3D-Kamera ist, dass zur Veränderung des Triangulationswinkels die Lichtquelle teilweise abgeschaltet oder abgeschattet wird und somit die Lichtintensität des Beleuchtungsstrahls abnimmt. Dadurch wird der Kontrast der Aufnahme vermindert und folglich die Messgenauigkeit verschlechtert.

Ein weiterer Nachteil ist, dass die ausgeleuchtete Pupille eine relativ umfangreiche räumliche Ausdehnung aufweisen muss, um durch Abschattung dieser ausgeleuchteten Pupille die gewünschte Winkeländerung herbeizuführen.

Aus DE 10 2005 002 190 A1 ist ein Scanner und ein Verfahren zum Betreiben eines Scanners bekannt, wobei der Scanner einen Projektor zum Erfassen eines Oberflächenreliefs umfasst, der so ausgebildet ist, dass ein Lichtstrahl des Projektors über das Oberflächenrelief geführt wird, um eine beleuchtete Stelle auf dem Oberflächenrelief zu erhalten. Ferner umfasst der Scanner einen Kollektor mit einem zu Schwingungen in zwei Dimensionen anregbaren Kollektormikrospiegel und einem punktförmigen Lichtdetektor, wobei der Kollektormikrospiegel derart in eine erste Richtung parallel zur Beleuchtungszeile und in eine von der ersten Richtung verschiedene zweite Richtung schwingbar angeordnet ist, dass eine Reflektion der beleuchteten Stelle innerhalb eines Abtastbereiches des Mikroscannerspiegels durch den selben auf den punktförmigen Lichtdetektor abbildbar ist und wobei der Kollektor ausgebildet ist, um ein Detektorsignal auszugeben, aus dem eine Position der beleuchteten Stelle in der ersten und zweiten Richtung ableitbar ist. Somit wird die Änderung des Triangulationswinkels zwischen dem Beleuchtungsstrahl und dem Reflexionsstrahl durch die Schwingung des Kollektormikrospiegels erzeugt, um einen gewissen Ausschnitt des Oberflächenreliefs des Messobjekts abzutasten.

Ein Nachteil dieses Scanners ist, dass die Änderung des Triangulationswinkels durch die Schwingung eines Kollektormikrospiegels erzeugt wird. Die Trägheit des Kollektormikrospiegels begrenzt die maximale Frequenz zur Änderung des Triangulationswinkels. Darüber hinaus ist die Ansteuerung eines mechanisch angetriebenen Kollektormikrospiegels mit einem umfangreichen Konstruktionsaufwand verbunden.

Aus der EP 0 250 993 A1 ist eine 3D-Kamera bekannt, die zur Bestimmung der Höhen- bzw. Tiefenunterschiede der Oberflächenstruktur Mittel aufweist, die ein Referenzmuster erzeugen, das auf die Oberflächenstruktur projizierbar ist. Anhand der mittels eines Bildsensors aufgenommenen Bilddaten und unter Verwendung eines als ein "Phaseschiebeverfahren" bezeichneten Verfahrens wird die Oberflächenstruktur in Hinsicht auf Höhen -bzw. Tiefenunterschiede analysiert und die räumliche Oberflächenstruktur wird dreidimensional dargestellt. Das linienförmige Referenzmuster, welches auf das Messobjekt projiziert wird, wird durch eine LCD-Anordnung oder ein mechanisches Gitter erzeugt. Der Eindeutigkeitsbereich, d.h. der Bereich in dem ein Höhenunterschied zweier Objektpunkte eindeutig erfasst werden kann, ist durch die Abstände zwischen den einzelnen Linien des Referenzmusters vorgegeben. Der Eindeutigkeitsbereich ist der Tiefenbereich in den eine Gitterperiode des Messgitters durch den Triangulationswinkel abgebildet wird.

Ein Nachteil dieser Vorrichtung ist, dass die Höheninformation von Punkten der Oberflächenstruktur, die sich im Schattenbereich des projizierten Referenzmusters befinden, nicht gemessen werden kann. Der Schattenbereich kann bei einer konvexen Form der Oberflächenstruktur auf der Seite des Objekts entstehen, die dem Strahl abgewandt ist.

Aus der DE 90 134 54 U1 ist eine 3D-Kamera bekannt, die im Projektionsstrahlengang Mittel zum Erzeugen eines ersten Referenzmusters und eines zweiten Referenzmusters aufweist, um den Eindeutigkeitsbereich zu vergrößern.

Ein Nachteil dieser Vorrichtung ist, dass die beiden Referenzmuster sich überlagern können und damit Messfehler verursacht werden. Darüber hinaus ist der konstruktive Aufwand relativ hoch.

Weiterhin wird vorgeschlagen, dass ein zweites Lichtstrahlenbündel, welches aus einer zweiten, zur ersten unterschiedlichen Richtung über einen weiteren Projektionsstrahlengang zu dem Messobjekt lenkbar ist. Dadurch kann die Oberflächenstruktur aus verschiedenen Richtungen ausgeleuchtet werden.

Ein Nachteil dieser Vorrichtung ist, dass die Anordnung einer zweiten Lichtquelle und eines Mittels zur Erzeugung eines zweiten Referenzmusters einen hohen konstruktiven Aufwand bedeutet und zu größeren Abmessungen und einem höheren Gewicht der 3D-Kamera führt. Dies ist insbesondere für handgehaltene dentale 3D-Kameras nachteilig.

Aus der WO 98/11403 A1 ist eine Vorrichtung zur dreidimensionalen Erfassung von Objekten bekannt. Die Projektionseinheit zur Erzeugung des Referenzmusters und die Aufnahmeeinheit zur Aufnahme des Reflexionsstrahls sind getrennt voneinander aufgebaut und können im Verlauf des Vermessungsvorganges unabhängig voneinander positioniert bzw. geführt werden. Somit kann der Triangulationswinkel beliebig verändert werden.

Ein Nachteil dieser Vorrichtung ist, dass die mechanische Positionsänderung der Projektionseinheit und der Aufnahmeeinheit mit einer durch die Trägheit der bewegten Projektionseinheit und der Aufnahmeeinheit festgelegten Frequenz durchgeführt werden kann. Darüber hinaus ist der zur Bedienung erforderliche Aufwand relativ hoch und dieses Verfahren für eine handgehaltene dentale 3D-Kamera ungeeignet. Zudem muss die dentale 3D Kamera bei einer geänderten Position neu kalibriert werden.

US 2005/0090749 A1 offenbart ein Verfahren und eine Vorrichtung zur Durchführung von optischen Aufnahmen für die Darstellung und 3D-Vermessung räumlicher Objekte, bei dem mindestens zwei einzelne Aufnahme nacheinander erfolgen und für die Einzelaufnahme die für die Bildwandlung wirksame Menge der Strahlenergie unterschiedlich gesteuert oder geregelt wird. Durch Verwendung verstellbarer optischer Mittel für die Beleuchtung des Objekts bzw. den Strahlengang zur Abbildung des Objekts auf dem Bildwandler wird die Erfassung einer größeren Umfangs von Bildinformationen über das betrachtete Objekt ermöglicht als auf Grund der Bauart bedingten Grenzen des verwendeten Bildwandlers in einem Einzelbild zur Verfügung stehen. Die Strahlenquellen sind mit optischen Mitteln, wie einem Kondensor, einer Maske und einem Objektiv versehen, und dienen zur Beleuchtung des Objekts. Mittels der optischen Mittel wird flächig ein Linienmuster auf das Objekt projiziert. Als Strahlenquellen kommen Blitzlampen zum Einsatz. Die Strahlquellen sind mittels elektrischer Verbindungen mit einer Einsteuerungseinheit verbunden. Der elektronische Bildwandler ist als CCD-Array ausgebildet und ebenfalls über elektrische Verbindungen mit einer Ansteuerungseinrichtung verbunden. Die Ansteuerung der Strahlquellen wird mit der Ansteuerung der Wechselfrequenz der Bildwandlers synchronisiert. In einem ersten Schritt wird eine erste Aufnahme mit der ersten Strahlenquelle durchgeführt und in einem zweiten Schritt wird eine zweite Aufnahme mit der zweiten Strahlquelle durchgeführt, wobei die Strahlenergie der ersten Strahlquelle sich von der Strahlenenergie der zweiten Strahlquelle unterscheidet. Die ersten und die zweite Aufnahme werden in einer schnellen Abfolge durch
geführt, um damit zwei aufeinander folgende Bilder des Objekts mit unterschiedlicher Strahlenergie zu erhalten.

DE 90 13 454 U1 offenbart eine 3D-Kamera zur Erfassung von Oberflächenstrukturen, insbesondere für zahnmedizinische Zwecke, Mitteln zur Erzeugung eines Lichtstrahlenbündels, welches über ein Projektionsstrahlengang aus einer ersten Richtung zu einem Aufnahmeobjekt lenkbar ist, mit einem Beobachtungsstrahlengang, der einen Bildsensor zum Empfangen des vom Aufnahmeobjekt reflektierten Lichtes aufweist, wobei der Projektionsstrahlengang und der Beobachtungsstrahlengang einen Winkel zueinander einnehmen und mit Mitteln im Projektionsstrahlengang zum Erzeugen eines Referenzmusters derart, dass ein erstes und zweites Referenzmuster auf das Aufnahmeobjekt projizierbar ist. In einer Ausführungsform ist der Strahlengang der 3D-Kamera gekennzeichnet dadurch, dass er durch einen ersten und einen zweiten Projektionsstrahlengang aus verschiedenen Richtungen gestaltet ist. Das vom Aufnahmeobjekt reflektierte Licht wird über einen Beobachtungsstrahlengang zu einem Bildsensor gelenkt. Der erste Projektionsstrahlengang ist dabei zur Erzeugung eines Referenzmusters auf dem Aufnahmeobjekt, das ortsfest ist, vorgesehen und der zweite Projektionsstrahlengang zur Erfassung der Oberflächenstruktur des Aufnahmeobjektes dient.

Ein weiterer Stand der Technik ist in DE 38 29 925 A1 gezeigt.

Die Aufgabe dieser Erfindung besteht folglich darin, eine 3D-Dentalkamera bereitzustellen, die es ermöglicht den Triangulationswinkel mit einem niedrigen aparativen Aufwand, mit einer hohen Genauigkeit und schnell zu verändern.

### Darstellung der Erfindung

Diese Aufgabe wird durch die in Ansprüchen 1 und 2 angegebenen Merkmale gelöst.

Die erfindungsgemäße 3D-Dentalkamera zur Erfassung von Oberflächenstrukturen eines Messobjekts mittels Triangulation umfasst eine Lichtquelle zur Erzeugung eines Beleuchtungsstrahls, Mittel zur Fokussierung des Beleuchtungsstrahls auf die Oberfläche des Messobjekts, einen Bildsensor zur Aufnahme eines in Form eines Beobachtungsstrahls von der Oberfläche des Messobjekts zurückgestreuten Beleuchtungsstrahls und Mittel zur Abbildung des Beobachtungsstrahls auf dem Bildsensor. Die Lichtquelle ist in mehrere Bereiche aufgeteilt, die unabhängig voneinander in ihrer Lichtintensität so regelbar sind, dass sich bei mindestens zwei Schaltmodi ein Lichtschwerpunkt des Beleuchtungsstrahls ändert.

Die erfindungsgemäße 3D-Dentalkamera ist zur Erfassung von räumlichen Oberflächenstrukturen mittels Triangulation geeignet. Bei einem Triangulationsmessverfahren wird die Oberfläche eines Messobjekts mit einem Beleuchtungsstrahl abgetastet und der vom Messobjekt zurückgestrahlte Beleuchtungsstrahl als ein Beobachtungsstrahl von einem Bildsensor aufgenommen. Anhand des bekannten Abstandes zwischen der Lichtquelle und dem Bildsensor, einer sogenannten Triangulationsbasis, eines bekannten Winkels zwischen der Triangulationsbasis und dem Beleuchtungsstrahl und eines bekannten Winkels zwischen der Triangulationsbasis und dem Beobachtungsstrahl wird die räumliche Position des beobachteten Messpunktes auf der Messobjektsoberfläche relativ zur Triangulationsbasis bestimmt.

Mittel zur Fokussierung des Beleuchtungsstrahls umfassen ein Mittel, das eine Pupillengröße des Beleuchtungsstrahls festlegen. Dabei kann die Größe der Pupille des Beleuchtungsstrahls durch Mittel, wie eine Blende, eine optische Anordnung mit einer Zwischenabbildung einer Blende oder Linsengrenzen von Linsen im Beleuchtungsstrahlengang begrenzt werden.

Die Pupille legt dabei die bei der Berechnung des Lichtschwerpunktes des Beleuchtungsstrahls zu berücksichtigende Fläche fest, wobei die Intensität von der Lichtquelle, wie einer LED, vorgegeben wird.

Eine Blende im Strahlengang des Beobachtungsstrahlengangs wird verwendet, um den Beobachtungsstrahl auf den Durchmesser der Blende einzugrenzen und die Richtung des Beobachtungsstrahls festzulegen. Bei der diffusen Reflektion wird der Beleuchtungsstrahl in alle Richtungen reflektiert, so dass die Richtung des Beobachtungsstrahls durch die Lage der Blende festgelegt wird.

Zur Beschleunigung des Triangulationsmessverfahrens wird ein sogenanntes Streifenprojektionsverfahren eingesetzt. Dabei wird ein Projektionsmuster, beispielsweise in Form von parallelen Streifen, auf das Messobjekt projiziert. Das Messobjekt wird zeitlich sequentiell mit einem Projektionsmuster beleuchtet. Der Bildsensor registriert das Projektionsmuster unter einem bekannten Winkel zur Triangulationsbasis, so dass für jeden Bildpunkt des Bildsensors eine zeitliche Folge von unterschiedlichen Helligkeitswerten erzeugt wird. Mittels des Streifenprojektionsverfahrens kann auf diese Weise die räumliche Lage von mehreren Messpunkten, die mit dem Projektionsmuster beleuchtet werden, simultan ermittelt werden. Die Oberfläche des Messobjekts muss demnach nicht punktweise mit einem punktförmigen Beleuchtungsstrahl abgetastet werden, sondern wird simultan flächig abgetastet.

Die erfinderische Lichtquelle ist in mehrere Bereiche aufgeteilt und erlaubt es durch Ansteuerung dieser Bereiche den Lichtschwerpunkt des Beleuchtungsstrahls zu verschieben. Ein Lichtschwerpunkt ist ein Flächenschwerpunkt eines Querschnitts des Beleuchtungsstrahls gewichtet mit der Intensität. Ein Beleuchtungsstrahl mit einem kreisrunden Querschnitt und eine zum Rand hin abfallenden Intensität würde somit seinen Lichtschwerpunkt in der Mitte an der Symmetrieachse des Beleuchtungsstrahls aufweisen. Die Intensität kann zum Rand hin auch gleichmäßig abfallen.

Durch Änderung des Lichtschwerpunkts beleuchtet der Beleuchtungsstrahl das Messobjekt aus einem anderen Winkel. Die Änderung des Lichtschwerpunktes führt damit zu einer Änderung des Triangulationswinkels. Eine Mehrfachmessung mit unterschiedlichen Triangulationswinkeln führt zu einer Vergrößerung des Eindeutigkeitsbereiches und erlaubt daher die Tiefenmessung über einen erweiterten Tiefenbereich.

Die bekannten Verfahren, um den Lichtschwerpunkt zu verschieben, beschreiben einerseits die mechanische Verlagerung der Lichtquelle und andererseits teilweise Abschattung des Beleuchtungsstrahls durch beispielsweise asymmetrische Blenden. Im Vergleich zu diesen bekannten Verfahren hat die vorliegende Erfindung den Vorteil, dass der Lichtschwerpunkt allein durch elektronische Ansteuerung der verschiedenen Bereiche der Lichtquelle verschoben wird, ohne dabei mechanische Mittel zu verwenden, die eine relativ lange Schaltzeit aufweisen und störungsanfälliger sind.

Vorteilhafterweise kann die Beleuchtung durch den Beleuchtungsstrahl nach der Beleuchtungsart der Köhler'schen Beleuchtung erfolgen, wobei die Lichtquelle in der Ebene einer Aperturblende scharf abgebildet wird.

Das Köhler'sche Beleuchtungsverfahren ermöglicht die unabhängige Regelung des Durchmessers der beleuchteten Zone und der numerischen Apertur der Beleuchtung. Dazu wird ein Aufbau aus zwei konvexen Linsen, nämlich einer Kollektorlinse und einer Kondensorlinse, und zwei Blenden, nämlich einer Leuchtfeldblende und einer Aperturblende, verwendet. Die Kollektorlinse bildet die ihr vorgeordnete Lichtquelle in der Ebene der Aperturblende scharf ab, wobei die Aperturblende in der Brennebene der Kondensorlinse steht. Die von einem Punkt in der Aperturblende ausgehenden Strahlen werden dadurch in der Objektebene zu Parallelstrahlen. Der Abstand zwischen der Kondensorlinse und der Objektebene wird so gewählt, dass die Leuchtfeldblende in der Objektebene scharf abgebildet wird. Der Durchmesser der beleuchteten Zone in der Objektebene lässt sich durch die Verstellung der Leuchtfeldblende regeln. Die Aperturblende steuert den Einfallswinkel, unter dem die Lichtstrahlen in der Objektebene einfallen, und somit die numerische Apertur der Beleuchtung.

Die Lichtquelle ist in mindestens drei Bereiche aufgeteilt. Dadurch kann die Lichtintensität von drei Breichen unabhängig voneinander geregelt werden, um den Lichtschwerpunkt zu verschieben. Die drei Bereiche können in einer Reihe nebeneinander angeordnet sein.

In einer Ausführungsform ist die Lichtquelle zwischen mindestens zwei Modi schaltbar, wobei in jedem Modus jeweils ein Bereich abgeschaltet ist und die übrigen mindestens zwei benachbarte Bereiche eingeschaltet sind.

Im ersten Schaltmodus ist der erste und zweite Bereich eingeschaltet und im zweiten Schaltmodus ist der zweite und dritte Bereich eingeschaltet. Der Lichtschwerpunkt des Beleuchtungsstahls liegt zwischen den eingeschalteten Bereichen und verschiebt sich beim Umschalten zwischen den Schaltmodi. Der Vorteil ist, dass der Beleuchtungsstrahl sich durch Überlagerung von Lichtstrahlen der beiden eingeschalteten Bereiche ergibt und dadurch eine relativ hohe Lichtintensität aufweist. Die relativ hohe Lichtintensität im Vergleich zur Lichtintensität nur eines Bereichs führt zu einer besseren Detektion des Beobachtungsstrahls mittels des Bildsensors und damit zu einer höheren Messgenauigkeit. Zwischen benachbarten eingeschalteten Bereichen ist nur eine kleine Lücke vorhanden, so dass die Verteilung der Lichtintensität über die gesamte Fläche der Lichtquelle nahezu homogen bleibt.

In einer Ausführungsform ist die Lichtquelle zwischen mindestens drei Modi schaltbar, wobei in jedem Modus jeweils ein Bereich eingeschaltet ist und die übrigen mindestens zwei Bereiche abgeschaltet sind.

Im ersten Schaltmodus ist der erste Bereich, im zweiten Schaltmodus der zweite Bereich und im dritten Schaltmodus der dritte Bereich eingeschaltet. Der Beleuchtungsstrahl wird folglich durch einen einzelnen Bereich erzeugt. Dadurch stellt die Breite eines einzelnen Bereichs die Breite der Lichtquelle dar. Eine geringere Breite der Lichtquelle führt zu geringeren Halbschatteneffekten, so dass die Messgenauigkeit erhöht wird. Die Halbstarkeneffekte entstehen dadurch, dass der Rand der Aperturblende von einem Rand der Lichtquelle und vom gegenüberliegenden Rand der Lichtquelle beleuchtet wird, so dass sich zwischen dem abgeschatteten Bereich und dem Bereich mit der maximalen Intensität hinter der Aperturblende ein Halbschatten ausbildet, der bei einer großen Lichtquellebreite relativ breit ist. Darüber hinaus führt die Umschaltung zwischen den Schaltmodi zu einer Lichtschwerpunktverschiebung um eine Strecke, die dem Abstand zwischen den jeweiligen Bereichen entspricht. Dadurch wird im Vergleich zu einer Umschaltung zwischen Schaltmodi mit jeweils zwei eingeschalteten Bereichen eine höhere Lichtschwerpunktsverschiebung erreicht und somit eine größere Verstellung des Triangulationswinkels verursacht. Vorteilhafterweise kann die Lichtquelle in mindestens zwei Bereiche aufgeteilt sein. Dadurch wird das Umschalten zwischen zwei Schaltmodi ermöglicht, um den Triangulationswinkel zu verändern.

Vorteilhafterweise können die Bereiche in ihrer Lichtintensität stufenlos regelbar sein. Dadurch lässt sich die Lichtintensität des Beleuchtungsstrahls einstellen. Falls der Beleuchtungsstrahl durch Überlagerung von Lichtstrahlen mehrerer Bereiche erzeugt wird, lässt sich der Lichtschwerpunkt geringfügig verschieben, indem das Verhältnis der Lichtintensitäten der einzelnen Lichtstrahlen verändert wird.

Im Strahlengang des Beleuchtungsstrahls werden Mittel zur Erzeugung eines Projektionsmusters auf der Oberfläche des Messobjekts angeordnet. Dadurch lässt sich ein Projektionsmuster auf das Messobjekt projizieren, um das oben genannte Streifenprojektionsverfahren anzuwenden. Das Streifenprojektionsverfahren hat den Vorteil, dass die räumlichen Lageinformationen des Messobjekts schneller als durch eine punktweise Abtastung des Messobjekts erfasst werden können.

Vorteilhafterweise kann die Änderung des Lichtschwerpunktes des Beleuchtungsstrahls zwischen zwei Schaltmodi der Lichtquelle eine Änderung eines Triangulationswinkels zwischen dem Beleuchtungsstrahl und dem Beobachtungsstrahl von 0,7° bis 1,3° erzeugen. Dadurch ist die Änderung des Triangulationswinkels ausreichend, um Zähne mit typischen Kavitäten auszuleuchten und die Messgenauigkeit erheblich zu verbessern.

Vorteilhafterweise können die getrennten Bereiche der Lichtquelle mehrere LEDs sein. LEDs sind kompakte, langlebige und energiesparende Lichtquellen und lassen sich einfach in ihrer Lichtintensität regeln. Daher sind LEDs in besonders vorteilhafter Weise als Bereiche der erfindungsgemäßen Lichtquelle geeignet.

Vorteilhafterweise können die getrennten Bereiche der Lichtquelle in einer Reihe senkrecht zum Beleuchtungsstrahl und in einer Triangulationsebene angeordnet sein.

Dies ist eine Anordnung der getrennten Bereiche, die es ermöglicht den Triangulationswinkel am effektivsten zu verändern. Falls in den Schaltmodi jeweils ausschließlich ein Bereich eingeschaltet bleibt, wird der Lichtschwerpunkt beim Umschalten zwischen den Schaltmodi um den Abstand zwischen den jeweiligen Bereichen verschoben. Die getrennten Bereiche sind in der Triangulationsebene angeordnet, wobei die Triangulationsebene durch den Beleuchtungsstrahl und dem Beobachtungsstrahl aufgespannt ist. Dadurch wird gegenüber beispielweise einer dreieckförmigen Anordnung der Bereiche die gewünschte Wirkung, nämlich die maximale Verschiebung des Lichtschwerpunktes, in besonders vorteilhafter Weise erzielt.

Vorteilhafterweise können die getrennten Bereiche der Lichtquelle eine rechteckige Form aufweisen und sich lückenlos aneinander anschließen. Dadurch treten bei einem Modus, bei denen mehrere Bereiche eingeschaltet sind, nur geringe Lücken auf, so dass die aus den getrennten Bereichen zusammengesetzte Lichtintensität eine nahezu homogene Verteilung der Lichtintensität aufweist. Eine homogene Verteilung der Lichtintensität in der Pupille führt zu einer homogenen Verteilung der Ausleuchtung des Messfeldes, die für ein Triangulationsverfahren besonders vorteilhaft ist, da das Messobjekt gleichmäßig ausgeleuchtet wird.

Diese rechteckige Bereiche können LEDs mit rechteckig geformten Leuchtflächen sein, wobei die Leuchtstoffschicht gleichmäßig in einer rechteckigen Form aufgetragen ist. Alternativ können auch großflächige LEDs mit einer gleichmäßig aufgetragenen Leuchtstoffschicht beliebiger Form verwendet werden, denen rechteckige Blenden vorgeschaltet sind.

Vorteilhafterweise kann die gesamte Lichtintensität der Lichtquelle zwischen den verschiedenen schaltbaren Modi unverändert bleiben. Dadurch wird die Oberfläche des Messobjekts in verschiedenen Modi mit der gleichen gesamten Lichtintensität beleuchtet. Dies hat den Vorteil, dass bei der Auswertung der Bilddaten keine Korrektur bezüglich der Lichtintensität durchgeführten werden muss.

Vorteilhafterweise kann die Lichtquelle zusätzlich zu den Modi mit einer gleichen gesamten Lichtintensität, bei denen bestimmte Bereiche ausgeschaltet sind, in einen zusätzlichen Modus schaltbar sein, bei dem alle Bereiche der Lichtquelle eingeschaltet sind. Dadurch wird ein zusätzlicher Modus mit einer höheren Lichtintensität bereitgestellt, dessen Triangulationswinkel des Schwerpunktstrahls sich von den Triangulationswinkeln der anderen Modi unterscheidet. In diesem zusätzlichen Modus kann der CCD-Sensor wegen der höheren Lichtintensität mit einer geringeren Beleuchtungsdauer beleuchtet werden, um das Bildsignal in den sensorspezifischen Detektionsbereich des CCD-Sensors zu bringen. Die erzeugten Bilddaten werden anschließend unter Berücksichtigung der höheren Lichtintensität und der kürzeren Beleuchtungsdauer kalibriert und mit den Bilddaten aus den Aufnahmen der übrigen Modi im Rahmen des Triangulationsverfahrens verrechnet.

Kurzbeschreibung der Zeichnungen Ausführungsbeispiele der Erfindung sind in der Zeichnung dargestellt. Es zeigt die
- Fig. 1: eine Dentalkamera zur Erfassung von Oberflächenstrukturen eines Messobjekts;

- Fig. 3: eine weitere Ausführungsform der Lichtquelle 3, umfassend drei LEDs in zwei Schaltmodi;
- Fig. 4: eine detaillierte Darstellung der optischen Anordnung der Dentalkamera.

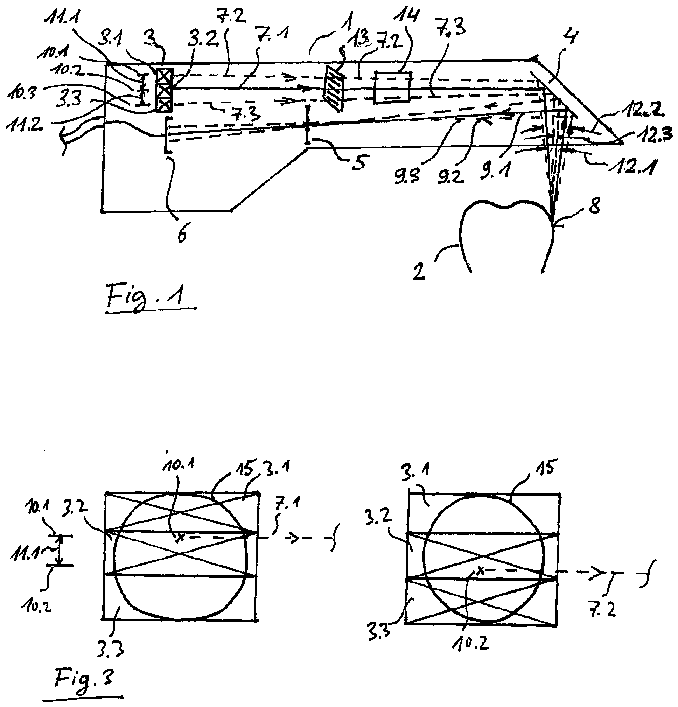

Die Fig. 1 zeigt eine Dentalkamera 1 zur Erfassung von Oberflächenstrukturen eines Messobjekts 2, der im dargestellten Fall ein einzelner Zahn ist. Die 3D-Dentalkamera 1 umfasst eine Lichtquelle 3, einen Umlenkspiegel 4, eine Blende 5 und einen Bildsensor 6. Die Lichtquelle 3 besteht aus drei LEDs 3.1, 3.2 und 3.3, die unabhängig voneinander regelbare Bereich der Lichtquelle 3 darstellen. Die Lichtquelle 3 erzeugt einen Beleuchtungsstrahl 7, der mittels des Umlenkspiegels 4 zur Oberfläche 8 des Messobjekts 2 umgeleitet wird. Der Beleuchtungsstrahl 7 wird von der Oberfläche 8 des Messobjekts 2 in Form eines Beobachtungsstrahls 9 zurückgestrahlt. Die Oberfläche 8 eines Zahns ist einem Lambert'schen Körper ähnlich, so dass der Beobachtungsstrahl 9 hauptsächlich durch diffuse Reflexion nach dem Lambertchen Gesetz erzeugt wird. Der Beobachtungsstrahl 9 durchquert die Blende 5 und trifft auf den Bildsensor 6. Die Blende 5 ist eine Lochblende, die nur einen schmalen Strahl zum Bildsensor 6 durchlässt. Der Bildsensor 6 zeichnet den Beobachtungsstrahl 9 auf und leitet die Bildinformationen an eine nicht dargestellte Bildauswertungseinheit weiter.

Die dargestellte Lichtquelle 3 weist drei verschiedene Schaltmodi auf, wobei im ersten Schaltmodus die mittlere LED 3.2 eingeschaltet ist und die übrigen LEDS 3.1 und 3.3 abgeschaltet sind. Im zweiten Schaltmodus ist die erste LED 3.1 eingeschaltet, wobei die zweite LED 3.2 und die dritte LED 3.3 abgeschaltet sind. Im dritten Schalzustand ist die dritte LED 3.3 eingeschaltet, wobei die erste LED 3.1 und die zweite LED 3.2 abgeschaltet sind. Der Beleuchtungsstrahl 7.1 und der Beobachtungsstrahl 9.1 im ersten Schaltmodus sind als volle Linien dargestellt, der Beleuchtungsstrahl 7.2 und der Beobachtungsstrahl 9.2 sind als gestrichelte Linien dargestellt und der Beleuchtungsstrahl 7.3 und der Beobachtungsstrahl 9.3 sind ebenfalls als gestrichelte Linien dargestellt.

Der Beleuchtungsstrahl 7 kann einen Lichtschwerpunkt aufweisen, der bezüglich der Intensitätsverteilung symmetrisch und im Intensitätsmaximum angeordnet ist

Ein Lichtschwerpunkt ist ein Flächenschwerpunkt eines Querschnitts des Beleuchtungsstrahls gewichtet mit der Intensität. Ein Beleuchtungsstrahl mit einem kreisrunden Querschnitt und einer zum Rand hin abfallenden Intensität würde somit seinen Lichtschwerpunkt in der Mitte, also in der Symmetrieachse des Beleuchtungsstrahls aufweisen.

Im ersten Schaltmodus liegt der Lichtschwerpunkt 10.1 in der Mitte der ersten LED 3.1, der Lichtschwerpunkt 10.2 des zweiten Schaltzustandes liegt in der Mitte der zweiten LED 3.2 und der Lichtschwerpunkt 10.3 des dritten Schaltzustandes liegt in der Mitte der dritten LED 3.3. Durch die Änderung der Schaltmodi wird somit der Lichtschwerpunkt 10 des Beleuchtungsstrahls 7 um einen Abstand 11.1 zwischen dem ersten Lichtschwerpunkt 11.1 und dem zweiten Lichtschwerpunkt 10.2 sowie um einen Abstand 11.2 zwischen dem zweiten Lichtschwerpunkt 10.2 und dem dritten Lichtschwerpunkt 10.3 verschoben. Durch die Verschiebung des Lichtschwerpunkts wird der Triangulationswinkel 12 verändert. Der Triangulationswinkel ist der Winkel zwischen dem Beleuchtungsstrahl und dem Beobachtungsstrahl 9. In Fig. 1 ist der Triangulationswinkel 12.1 im ersten Schaltzustand, Triangulationswinkel 12.2 im zweiten Schaltmodus und der Triangulationswinkel 12.3 im dritten Schaltmodus dargestellt.

Die dargestellte Vorrichtung erlaubt es, ausschließlich durch Ansteuerung der drei LEDs ohne Anwendung von mechanischen Mitteln, wie mechanisch verstellbarer Blenden oder Fähnchen, den Triangulationswinkel 12 auf eine einfache Weise zu verändern. Die Aufnahmen werden mittels der erfinderischen Vorrichtung in den verschiedenen drei Zuständen vom selben Messobjekt 2 aus drei geringfügig verschobenen Beleuchtungsrichtungen durchgeführt. Die Beobachtungsrichtung bleibt dabei unverändert. Bei Änderung des Triangulationswinkels 12 werden die von verschiedenen Punkten dieser Flächen reflektierte Beobachtungsstrahlen auf dem Bildsensor 6 nicht überlagert, sondern treffen differenziert voneinander auf den Bildsensor 6. Aus den Bildinformationen des Bildsensors 6 wird die räumliche Position dieser Punkte berechnet. Als Matchingverfahren zum Zusammenführen von mehreren Aufnahmen in ein gemeinsames Koordinatensystem dienen Verfahren, wobei punktförmige Marker auf dem Messobjekt als übereinstimmende Punkte der verschiedenen Aufnahmen angebracht werden und die verschiedenen Aufnahmen anhand dieser Marker überlagert werden oder die verschiedenen Aufnahmen können anhand von charakteristischen Merkmalen des Messobjekts, wie Erhöhungen, Vertiefungen oder charakteristischen Formen, überlagert werden. Dabei ist zur Überlagerung von räumlichen Aufnahmen das Erkennen von drei punktförmigen Markern bzw. von drei übereinstimmenden charakteristischen Merkmalen des Messobjekts ausreichend.

Im Strahlengang des Beleuchtungsstrahls 7 ist ein Mittel 13 zur Erzeugung eines Referenzmusters in Form eines parallelen Linienmusters dargestellt. Das Mittel 13 ist ein Gitter mit parallel angeordneten Schlitzen, wobei die Schlitze senkrecht zur linearen Ausrichtung der drei LEDs 10.1, 10.2 und 10.3 angeordnet sind. Damit wird bei der Änderung des Triangulationswinkels 12 das Linienmuster in einer zu den Linien senkrechten Richtung verschoben. Beim Triangulationsverfahren wird das Messobjekt zeitlich sequenziell mit diesem Linienmuster abgetastet. Bei der Auswertung der Bildinformation des Bildsensors 6 in Form von zeitlicher Folge unterschiedlicher Helligkeitswerte muss jeder Beobachtungsstrahl 9 dem jeweiligen Lichtstreifen des Lichtmusters zugeordnet werden. Die Zuordnung kann über ein Graycode-Verfahren erfolgen, indem jeder Lichtstreifen einen Binärkode aus verschiedenen Helligkeitswerten enthält, der die Nummer des Streifens kennzeichnet. Eine höhere Genauigkeit kann mit dem Phasenschiebeverfahren erreicht werden, da es die Zuordnung einer nicht diskreten Koordinate erlaubt.

Darüber hinaus ist im Strahlengang der Beleuchtungsstrahlen 7.1, 7.2 und 7.3 ein Objektiv 14 als ein Mittel zur Fokussierung auf das Messobjekt 2 angeordnet.

Die Fig. 3 zeigt eine weitere Ausführungsform der Lichtquelle 3, umfassend drei LEDs 3.1, 3.2 und 3.3, mit zwei Schaltmodi. Die linke Darstellung zeigt die Lichtquelle im ersten Schaltmodus, wobei die LEDs 3.1 und 3.2 eingeschaltet sind und die dritte LED 3.3 ausgeschaltet ist. Die zweite Darstellung zeigt die Lichtquelle im zweiten Schaltzustand, wobei die erste LED 3.1 ausgeschaltet ist und die LEDs 3.2 und 3.3 eingeschaltet sind. Die LEDs 3.1, 3.2 und 3.3 sind rechteckig, wie in Fig. 2, und weisen eine homogen verteilte Lichtintensität auf. In beiden Schaltmodi sind jeweils zwei LEDs eingeschaltet, so dass die gesamte Lichtintensität der Lichtquelle 3 in beiden Schaltmodi gleich bleibt. Die Pupille 15 der gesamten optischen Anordnung im Beleuchtungsstrahlengang ist als eine kreisrunde Fläche dargestellt. Der Lichtschwerpunkt 10.1 im ersten Schaltmodus des Beleuchtungsstrahls 7.1 liegt oberhalb des Mittelpunktes der Pupille 15, in dem von der ersten LED 3.1 und der zweiten LED 3.2 ausgeleuchtet Bereich der Pupille 15. Durch die Überlagerung der Lichtstrahlen der ersten LED 3.1 und der zweiten LED 3.2 weist der Beleuchtungsstrahl 7.1 einen Querschnitt auf, der einem Abschnitt der kreisrunden Pupille 15 entspricht. Im zweiten Schaltmodus liegt der Lichtschwerpunkt 10.2 des Beleuchtungsstrahls 7.2 unterhalb des Mittelpunkt der Pupille 15 im unteren Bereich der Pupille 15, der von der zweiten LED 3.2 und der dritten LED 3.3 ausgeleuchtet ist. Der Lichtschwerpunkt verschiebt sich demnach beim Umschalten der Lichtquelle aus dem ersten in den zweiten Schaltmodus um einen Abstand 11.1. Durch die Verschiebung des Lichtschwerpunkts wird auch der Triangulationswinkel 12 aus Fig. 1 verändert.

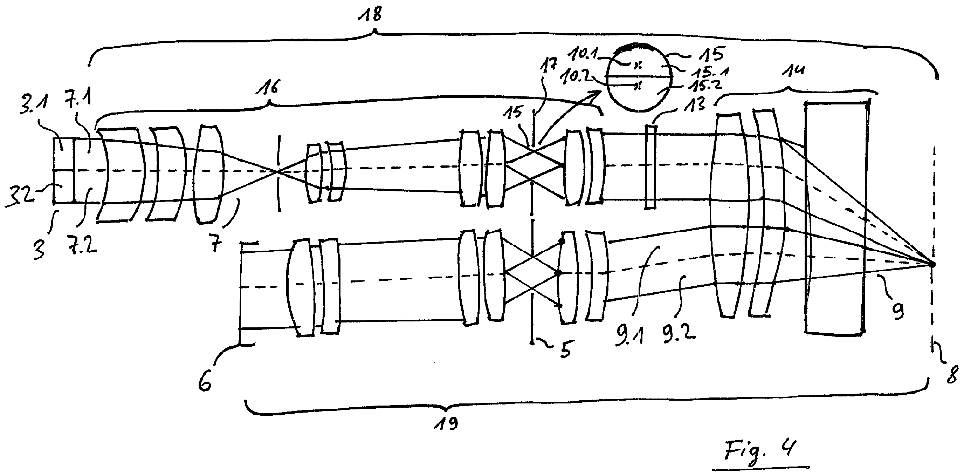

Die Fig. 4 zeigt ein detaillierte Darstellung der optischen Anordnung der Dentalkamera 1. Die Lichtquelle 3 besteht aus einer ersten rechteckigen LED 3.1 und einer zweiten rechteckigen LED 3.2, wobei die beiden LEDs lückenlos zueinander in einer Reihe in der Triangulationsebene 16 angeordnet sind. Die Triangulationsebene 16 wird durch den Beleuchtungsstrahl 7 und den Beobachtungsstrahl 9 aufgespannt. Im ersten Modus strahlt die erste LED 3.1 einen ersten Beleuchtungsstrahl 7.1 ab und im zweiten Modus strahlt die zweite LED 3.2 einen zweiten Beleuchtungsstrahl 7.2 ab. Die Beleuchtungsstrahlen 7.1 und 7.2 durchlaufen eine Köhler'sche Optik 16 für die Köhler'sche Beleuchtung, wobei die Lichtquelle 3 in der Ebene einer Aperturblende 17 abgebildet wird. Diese Abbildung der Lichtquelle 3 in der Ebene der Aperturblende 17 stellt die Pupille 15 eines Beleuchtungsstrahlengangs 18 dar. Die Beleuchtungsstrahlen 7.1 und 7.2 durchlaufen weiterhin das Gitter 13 mit parallel angeordneten Schlitzen, wobei ein Streifenmuster erzeugt wird, das mittels des Objektivs 14, das aus mehreren Linsen besteht, auf die Oberfläche 8 des Messobjekts 2 projiziert wird. Im ersten Modus wird der obere Bereich der Pupille 15.1 ausgeleuchtet, wobei der Lichtschwerpunkt 10.1 oberhalb des Mittelpunktes der Pupille 15 liegt. Im zweiten Modus wird der untere Bereich der Pupillen 15.2 ausgeleuchtet, wobei der Lichtschwerpunkt 10.2 unterhalb des Mittelpunktes der Pupille 15 liegt. Die Beleuchtungsstrahlen 7.1 und 7.2 werden als Beobachtungsstrahlen 9.1 und 9.2 von der Oberfläche 8 zurückgestrahlt und mittels des Objektivs 14 und weiterer Linsensysteme zum Bildsensor 6 geleitet und von diesem aufgenommen. Die Blende 5 grenzt die Pupille eines Beobachtungsstrahlengangs 19 ein. Die äußeren Grenzen der Beleuchtungsstrahlen 7.1, 7.2 und der Beobachtungsstrahlen 9.1, 9.2 sind als volle Linien und die Grenze zwischen den Beleuchtungsstrahlen 7.1, 7.2 und den Beobachtungsstrahlen 9.1, 9.2 als eine gestrichelte Linie dargestellt.

### Bezugszeichenliste

- 1: Dentalkamera
- 2: Messobjekt
- 3: Lichtquelle
- 3.1: LED
- 3.2: LED
- 3.3: LED
- 4: Umlenkspiegel
- 5: Blende
- 6: Bildsensor
- 7: Beleuchtungsstrahl
- 8: Oberfläche
- 9: Beobachtungsstrahl
- 9.1: Beobachtungsstrahl
- 9.2: Beobachtungsstrahl
- 9.3: Beobachtungsstrahl
- 10: Lichtschwerpunkt
- 10.1: Lichtschwerpunkt
- 10.2: Lichtschwerpunkt
- 10.3: Lichtschwerpunkt
- 11: Verschiebung des Lichtschwerpunktes
- 11.1: Verschiebung des Lichtschwerpunktes
- 11.2: Verschiebung des Lichtschwerpunktes
- 12: Triangulationswinkel
- 12.1: Triangulationswinkel
- 12.2: Triangulationswinkel
- 12.3: Triangulationswinkel
- 13: Gitter
- 14: Objektiv
- 15: Pupille
- 16: Triangulationsebene
- 17: Aperturblende
- 18: Beleuchtungsstrahlengang
- 19: Beobachtungsstrahlengang

## Patentansprüche

1. 3D-Dentalkamera (3) zur Erfassung von Oberflächenstrukturen eines Messobjekts (2) mittels Triangulation, umfassend eine Lichtquelle (3) zur Erzeugung eines Beleuchtungsstrahls (7.1, 7.2, 7.3), ein einziges Gitter (13) zur Erzeugung eines Referenzmusters im Strahlengang des Beleuchtungsstrahls (7.1, 7.2, 7.3.) Mittel (14) zur Fokussierung des Beleuchtungsstrahls (7.1, 7.2, 7.3) auf die Oberfläche des Messobjekts (2), einen Bildsensor (6) zur Aufnahme eines in Form eines Beobachtungsstrahls (9.1, 9.2, 9.3) von der Oberfläche des Messobjekts (2) zurückgestrahlten Beleuchtungsstrahls (7.1, 7.2, 7.3) und Mittel (5) zur Abbildung des Beobachtungsstrahls (9.1, 9.2, 9.3) auf den Bildsensor (6), **dadurch gekennzeichnet, dass** die Lichtquelle (3) in mindestens drei Bereiche (3.1, 3.2, 3.3) aufgeteilt ist, die unabhängig voneinander in ihrer Lichtintensität regelbar sind, so dass damit ein Triangulationswinkel (12, 12.1, 12.2, 12.3) verändert wird, wobei die Bereiche (3.1, 3.2, 3.3) der Lichtquelle (3) sich lückenlos aneinander anschließen und wobei die Lichtquelle (3) zwischen mindestens zwei Modi schaltbar ist, wobei in jedem Modus jeweils ein Bereich (3.1, 3.3) abgeschaltet ist und die übrigen mindestens zwei benachbarte Bereiche (3.2, 3.3; 3.1, 3.2) eingeschaltet sind.

2. 3D-Dentalkamera (3) zur Erfassung von Oberflächenstrukturen eines Messobjekts (2) mittels Triangulation, umfassend eine Lichtquelle (3) zur Erzeugung eines Beleuchtungsstrahls (7.1, 7.2, 7.3), ein einziges Gitter (13) zur Erzeugung eines Referenzmusters im Strahlengang des Beleuchtungsstrahls (7.1, 7.2, 7.3.) Mittel (14) zur Fokussierung des Beleuchtungsstrahls (7.1, 7.2, 7.3) auf die Oberfläche des Messobjekts (2), einen Bildsensor (6) zur Aufnahme eines in Form eines Beobachtungsstrahls (9.1, 9.2, 9.3) von der Oberfläche des Messobjekts (2) zurückgestrahlten Beleuchtungsstrahls (7.1, 7.2, 7.3) und Mittel (5) zur Abbildung des Beobachtungsstrahls (9.1, 9.2, 9.3) auf den Bildsensor (6), **dadurch gekennzeichnet, dass** die Lichtquelle (3) in mindestens drei Bereiche (3.1, 3.2, 3.3) aufgeteilt ist, die unabhängig voneinander in ihrer Lichtintensität regelbar sind, so dass damit ein Triangulationswinkel (12, 12.1, 12.2, 12.3) verändert wird, wobei die Bereiche (3.1, 3.2, 3.3) der Lichtquelle (3) sich lückenlos aneinander anschließen und wobei die Lichtquelle (3) zwischen mindestens drei Modi schaltbar ist, wobei in jedem Modus jeweils ein Bereich (3.1, 3.2., 3.3) eingeschaltet ist und die übrigen mindestens zwei Bereiche (3.2, 3.3; 3.1, 3.3; 3.1, 3.2) abgeschaltet sind.

3. 3D-Dentalkamera (1) nach Anspruch 1 oder 2, **dadurch gekennzeichnet, dass** die Beleuchtung durch den Beleuchtungsstrahl (7.1, 7.2, 7.3) nach der Beleuchtungsart der Köhler'schen Beleuchtung erfolgt, wobei die Lichtquelle in der Ebene einer Aperturblende scharf abgebildet wird.

4. 3D-Dentalkamera (1) nach einem der Ansprüche 1 bis 3, **dadurch gekennzeichnet, dass** die Bereiche (3.1, 3.2, 3.3) ab- und anschaltbar sind.

5. 3D-Dentalkamera (1) nach einem der Ansprüche 1 bis 4, **dadurch gekennzeichnet, dass** die Bereiche (3.1, 3.2, 3.3) in ihrer Lichtintensität stufenlos regelbar sind.

6. 3D-Dentalkamera (1) nach einem der Ansprüche 1 bis 5, **dadurch gekennzeichnet, dass** die Änderung (11.1, 11.2) des Lichtschwerpunktes (10.1, 10.2, 10.3) des Beleuchtungsstrahls (7.1, 7.2, 7.3) zwischen zwei Schaltmodi der Lichtquelle (3) eine Änderung eines Triangulationswinkels (12.1, 12.2, 12.3) zwischen dem Beleuchtungsstrahl (7.1, 7.2, 7.3) und dem Beobachtungsstrahl (9.1, 9.2, 9.3) von 0,7° bis 1,3° erzeugt.

7. 3D-Dentalkamera (1) nach einem der Ansprüche 1 bis 6, **dadurch gekennzeichnet, dass** die getrennten Bereiche (3.1, 3.2, 3.3) der Lichtquelle (3) mehrere LEDs sind.

8. 3D-Dentalkamera (1) nach einem der Ansprüche 1 bis 7, **dadurch gekennzeichnet, dass** die getrennten Bereiche (3.1, 3.2, 3.3) der Lichtquelle (3) in einer Reihe senkrecht zum Beleuchtungsstrahl (7.1, 7.2, 7.3) und in einer Triangulationsebene angeordnet sind.

9. 3D-Dentalkamera (1) nach einem der Ansprüche 1 bis 8, **dadurch gekennzeichnet, dass** die gesamte Lichtintensität der Lichtquelle (3) zwischen den verschiedenen schaltbaren Modi unverändert bleibt.

10. 3D-Dentalkamera (1) nach einem der Ansprüche 1 bis 9, **dadurch gekennzeichnet, dass** die Lichtquelle (3) zusätzlich zu den Modi, bei denen bestimmte Bereiche (3.1, 3.2, 3.3) ausgeschaltet sind, in einen zusätzlichen Modus schaltbar ist, bei dem alle Bereiche (3.1, 3.2, 3.3) der Lichtquelle (3) eingeschaltet sind.

11. 3D-Dentalkamera (1) nach einem der Ansprüche 1 bis 10, **dadurch gekennzeichnet, dass** die getrennten Bereiche (3.1, 3.2, 3.3) der Lichtquelle (3) eine rechteckige Form aufweisen.

## Claims

1. 3D dental camera (3) for recording surface structures of a measuring object (2) by means of triangulation, comprising a light source (3) for producing an illumination beam (7.1, 7.2, 7.3), a single grid (13) for generating a reference pattern in the beam path of the illumination beam (7.1, 7.2, 7.3), means (14) for focusing the illumination beam (7.1, 7.2, 7.3) onto the surface of the measuring object (2), an image sensor (6) for receiving an illumination beam (7.1, 7.2, 7.3) reflected by the surface of the measuring object (2) in the form of an observation beam (9.1, 9.2, 9.3) and means (5) for focusing the observation beam (9.1, 9.2, 9.3) onto the image sensor (6), **characterized in that** the light source (3) is split into at least three regions (3.1, 3.2, 3.3) that can be independently regulated in terms of the their light intensity in order to change a triangulation angle (12, 12.1, 12.2, 12.3), wherein the regions (3.1, 3.2, 3.3) of the light source (3) adjoin one another without any gaps and wherein the light source (3) can be switched between at least two modes, wherein, in each mode, one region (3.1, 3.3) is switched off and the other at least two adjacent regions (3.2, 3.3; 3.1, 3.2) are switched on.

2. 3D dental camera (3) for recording surface structures of a measuring object (2) by means of triangulation, comprising a light source (3) for producing an illumination beam (7.1, 7.2, 7.3), a single grid (13) for generating a reference pattern in the beam path of the illumination beam (7.1, 7.2, 7.3), means (14) for focusing the illumination beam (7.1, 7.2, 7.3) onto the surface of the measuring object (2), an image sensor (6) for receiving an illumination beam (7.1, 7.2, 7.3) reflected by the surface of the measuring object (2) in the form of an observation beam (9.1, 9.2, 9.3) and means (5) for focusing the observation beam (9.1, 9.2, 9.3) onto the image sensor (6), **characterized in that** the light source (3) is split into at least three regions (3.1, 3.2, 3.3) that can be independently regulated in terms of the their light intensity in order to change a triangulation angle (12, 12.1, 12.2, 12.3), wherein the regions (3.1, 3.2, 3.3) of the light source (3) adjoin one another without any gaps and wherein the light source (3) can be switched between at least three modes, wherein, in each mode, one region (3.1, 3.2, 3.3) is switched on and the other at least two adjacent regions (3.2, 3.3; 3.1, 3.3; 3.1, 3.2) are switched off.

3. 3D dental camera (1) according to Claim 1 or 2, **characterized in that** the illumination by the illumination beam (7.1, 7.2, 7.3) is carried out according to the Kohler illumination type of illumination, wherein the light source is sharply imaged in the plane of an aperture diaphragm.

4. 3D dental camera (1) according to any one of Claims 1 to 3, **characterized in that** the regions (3.1, 3.2, 3.3) can be switched on and off.

5. 3D dental camera (1) according to any one of Claims 1 to 4, **characterized in that** the regions (3.1, 3.2, 3.3) can be continuously variably regulated in terms of their light intensity.

6. 3D dental camera (1) according to any one of Claims 1 to 5, **characterized in that** the change (11.1, 11.2) of the light center position (10.1, 10.2, 10.3) of the illumination beam (7.1, 7.2, 7.3) between two switching modes of the light source (3) produces a change in a triangulation angle (12.1, 12.2, 12.3) between the illumination beam (7.1, 7.2, 7.3) and the observation beam (9.1, 9.2, 9.3) of 0.7° to 1.3°.

7. 3D dental camera (1) according to any one of Claims 1 to 6, **characterized in that** the separated regions (3.1, 3.2, 3.3) of the light source (3) are a plurality of LEDs.

8. 3D dental camera (1) according to any one of Claims 1 to 7, **characterized in that** the separated regions (3.1, 3.2, 3.3) of the light source (3) are arranged in a row perpendicular to the illumination beam (7.1, 7.2, 7.3) and in a triangulation plane.

9. 3D dental camera (1) according to any one of Claims 1 to 8, **characterized in that** the overall light intensity of the light source (3) remains unchanged between the different switchable modes.

10. 3D dental camera (1) according to any one of Claims 1 to 9, **characterized in that**, in addition to the modes in which specific regions (3.1, 3.2, 3.3) are switched off, the light source (3) can be switched into an additional mode in which all regions (3.1, 3.2, 3.3) of the light source (3) are switched on.

11. 3D dental camera (1) according to any one of Claims 1 to 10, **characterized in that** the separated regions (3.1, 3.2, 3.3) of the light source (3) comprise a rectangular shape.

## Revendications

1. Caméra 3D à usage dentaire (3) pour la détection par triangulation de structures superficielles d'un objet à mesurer (2), comprenant une source lumineuse (3) destinée à la production d'un faisceau
d'éclairage (7.1, 7.2, 7.3),une grille unique (13) destinée à la production d'un motif de référence dans la trajectoire de rayonnement du faisceau d'éclairage (7.1, 7.2, 7.3), un moyen (14) de focalisation du faisceau d'éclairage (7.1, 7.2, 7.3) sur la surface de l'objet à mesurer (2), un capteur d'image (6) pour l'enregistrement d'un faisceau d'éclairage (7.1, 7.2, 7.3) réfléchi par la surface de l'objet à mesurer (2) sous la forme d'un faisceau d'observation (9.1, 9.2, 9.3), et un moyen (5) de représentation du faisceau d'observation (9.1, 9.2, 9.3) sur le capteur d'image (6), **caractérisée en ce que** la source lumineuse (3) est subdivisée en au moins trois zones (3.1, 3.2, 3.3) dont l'intensité lumineuse est réglable indépendamment les unes des autres de manière à pouvoir modifier un angle de
triangulation (12, 12.1, 12.2, 12.3), les zones (3.1, 3.2, 3.3) de la source lumineuse (3) étant directement contiguës entre elles
et la source lumineuse (3) pouvant être commutée entre au moins deux modes dans chacun desquels une zone (3.1, 3.3) est éteinte et les autres au moins deux zones voisines (3.2, 3.3 ; 3.1, 3.2) sont respectivement allumées.

2. Caméra 3D à usage dentaire (3) pour la détection par triangulation de structures superficielles d'un objet à mesurer (2), comprenant une source lumineuse (3) destinée à la production d'un faisceau
d'éclairage (7.1, 7.2, 7.3), une grille unique (13) destinée à la production d'un motif de référence dans la trajectoire de rayonnement du faisceau d'éclairage (7.1, 7.2, 7.3), un moyen (14) de focalisation du faisceau d'éclairage (7.1, 7.2, 7.3) sur la surface de l'objet à mesurer (2), un capteur d'image (6) pour l'enregistrement d'un faisceau d'éclairage (7.1, 7.2, 7.3) réfléchi par la surface de l'objet à mesurer (2) sous la forme d'un faisceau d'observation (9.1, 9.2, 9.3), et un moyen (5) pour la représentation du faisceau d'observation (9.1, 9.2, 9.3) sur le capteur d'image (6), **caractérisée en ce que** la source lumineuse (3) est subdivisée en au moins trois zones (3.1, 3.2, 3.3) dont l'intensité lumineuse est réglable indépendamment les unes des autres, de manière à modifier un angle de triangulation (12, 12.1, 12.2, 12.3), les zones (3.1, 3.2, 3.3) de la source lumineuse (3) étant directement contiguës entre elles et la source lumineuse (3) pouvant être commutée entre au moins trois modes dans chacun desquels une zone (3.1, 3.2, 3.3) est allumée et les autres au moins deux zones (3.2, 3.3 ; 3.1, 3.3 ; 3.1, 3.2) sont respectivement éteintes.

3. Caméra 3D à usage dentaire (1) selon la revendication 1 ou 2, **caractérisée en ce que** l'éclairage est effectué par le faisceau d'éclairage (7.1, 7.2, 7.3) à la manière d'un éclairage de Köhler, la source lumineuse étant représentée de façon nette dans le plan d'un diaphragme d'ouverture.

4. Caméra 3D à usage dentaire (1) selon une des revendications 1 à 3, **caractérisée en ce que** les zones (3.1, 3.2, 3.3) peuvent être allumées et éteintes.

5. Caméra 3D à usage dentaire (1) selon une des revendications 1 à 4, **caractérisée en ce que** l'intensité lumineuse des zones (3.1, 3.2, 3.3) peut être réglée de manière continue.

6. Caméra 3D à usage dentaire (1) selon une des revendications 1 à 5,**caractérisée en ce que** la modification (11.1, 11.2) du centre lumineux (10.1, 10.2, 10.3) du faisceau d'éclairage (7.1, 7.2, 7.3) entre deux modes de commutation de la source lumineuse (3) produit une modification d'un angle de triangulation (12.1, 12.2, 12.3) entre le faisceau d'éclairage (7.1, 7.2, 7.3) et le faisceau d'observation (9.1, 9.2, 9.3) de 0,7° à 1,3°.

7. Caméra 3D à usage dentaire (1) selon une des revendications 1 à 6,**caractérisée en ce que** les zones séparées (3.1, 3.2, 3.3) de la source lumineuse (3) consistent en plusieurs DEL.

8. Caméra 3D à usage dentaire (1) selon une des revendications 1 à 7, **caractérisée en ce que** les zones séparées (3.1, 3.2, 3.3) de la source lumineuse (3) sont disposées en une rangée perpendiculaire au faisceau d'éclairage (7.1, 7.2, 7.3) et dans un plan de triangulation.

9. Caméra 3D à usage dentaire (1) selon une des revendications 1 à 8, **caractérisée en ce que** l'intensité lumineuse totale de la source lumineuse (3) reste inchangée entre les différents modes de commutation.

10. Caméra 3D à usage dentaire (1) selon une des revendications 1 à 9,**caractérisée en ce que** la source lumineuse (3) peut être commutée, en plus des modes dans lesquels des zones précises (3.1, 3.2, 3.3) sont éteintes, dans un mode supplémentaire dans lequel toutes les zones (3.1, 3.2, 3.3) de la source lumineuse (3) sont allumées.

11. Caméra 3D à usage dentaire (1) selon une des revendications 1 à 10,**caractérisée en ce que** les zones séparées (3.1, 3.2, 3.3) de la source lumineuse (3) présentent une forme rectangulaire.
